# EUROPÄISCHE PATENTANMELDUNG

(11) **EP 1 392 051 A2**
(43) Veröffentlichungstag der Anmeldung: **25.02.2004**
(21) Anmeldenummer: 03018594.6
(22) Anmeldetag: 19.08.2003
(51) Int. Cl.: H04N 3/15

(54) **Kamera, Kameraanordnung sowie Verfahren zum Betrieb von Kamera und Kameraanordnung**

(30) Priorität: 23.08.2002 DE 10239523
(71) Anmelder: Z/I Imaging GmbH, 73447 Oberkochen (DE)
(72) Erfinder: Graser, Franz, 73433 Aalen (DE); Hinz, Alexander, Dr., 89551 Koenigsbronn (DE); Stacklies, Horst, 73431 Aalen (DE)
(74) Vertreter: Lorenz, Werner, Dr.-Ing.

(57) **Zusammenfassung**

Bei einer Kamera mit einer CCD-Sensoreinheit 4 und einem Verschluss 3 im Abbildungsstrahlengang ist eine Einrichtung für Reset der CCD-Sensoreinheit 3 vorgesehen. Diese Einrichtung für Reset der CCD-Sensoreinheit 3 umfasst eine Steuereinheit 5, welche nach Öffnen des Verschlusses einen Reset der CCD-Sensoreinheit zeitlich verzögert und / oder zeitüberwacht bewirkt. Mehrere solcher Kameras können zu einer Kameraanordnung für zeitlich aufeinander abgestimmte Bildaufnahmen zusammengefasst werden. Es wird ein Verfahren zum Betrieb von Kamera und Kameraanordnung angegeben, bei dem der Reset einer CCD-Sensoreinheit hier nach Öffnung eines mechanischen Verschlusses 3 im Abbildungsstrahlengang durchgeführt wird.

## Beschreibung

Die Erfindung betrifft eine Kamera mit einer CCD-Sensoreinheit, mit einem Verschluss im Abbildungsstrahlengang und mit einer Einrichtung für Reset der CCD-Sensoreinheit sowie eine Kameraanordnung, bei der wenigstens eine erste derartige Kamera und eine zweite derartige Kamera vorgesehen sind. Die Erfindung betrifft weiter ein Verfahren zum Betrieb einer Kamera mit einer CCD-Sensoreinheit und einem Verschluss im Abbildungsstrahlengang sowie ein Verfahren zum Betrieb einer Kameraanordnung, die wenigstens eine erste Kamera mit einer CCD-Sensoreinheit und einem Verschluss im Abbildungsstrahlengang und eine zweite Kamera mit einer CCD-Sensoreinheit und einen Verschluss im Abbildungsstrahlengang umfasst.

Eine Kamera mit einer CCD-Sensoreinheit und einem Verschluss im Abbildungsstrahlengang ist aus der EP 0 129 122 B1 bekannt. Dort ist eine CCD-Kamera mit CCD-Sensoreinheit beschrieben, die in einem Suchermodus und einem Bildspeichermodus betrieben werden kann. In dem Suchermodus wird bei geöffnetem Verschluss auf einem Teilbereich der CCD-Sensoreinheit mittels einer Linse das Bild eines Objektbereichs erzeugt. Dieses Bild wird aus der CCD-Sensoreinheit laufend ausgelesen und einem Betrachter an einem Display angezeigt. Für das Abspeichern eines gerade von einem Beobachter im Suchermodus betrachteten Bildes wird der Verschluss geschlossen und die CCD-Sensoreinheit in ein Speichermedium ausgelesen.

Als Verschlüsse in Kameras sind insbesondere mechanische Verschlüsse bekannt, beispielsweise Schlitz- oder Zentralverschlüsse. So ist etwa in der DE 198 34 761 A1 ein mechanischer Verschluss beschrieben, bei dem eine Blendenöffnung mittels Lamellen eingestellt werden kann, denen ein hierzu elektrischer Antrieb zugeordnet ist. Die DE 198 32 244 A1 offenbart einen elektromagnetisch angetriebenen Schlitzverschluss für eine Kamera.

Neben mechanischen Verschlüssen gibt es auch Kameraverschlüsse auf Flüssigkristallbasis. Solche nichtmechanischen Verschlüsse lassen sich zwar vergleichsweise schnell ansteuern. Im Vergleich zu mechanischen Verschlüssen haben sie jedoch eine relativ geringe Lichttransmission und Löschungsvermögen. Kameraverschlüsse auf Flüssigkristallbasis eignen sich somit nicht gut für den Einsatz in hochauflösenden Kameras.

Um bei CCD-Kameras eine maximale Bildauflösung zu erzielen, wird als CCD-Sensoreinheit ein sogenannter "Full-Frame-CCD-Sensor" eingesetzt. Bei dieser Art von CCD-Sensor werden die lichtempfindlichen Wandlerelemente nicht nur für die eigentliche Bildaufnahme, sondern auch für den Ladungstransport während des Auslesens verwendet. "Full-Frame-CCD-Sensoren" haben eine vergleichsweise große Bildfläche und ermöglichen eine Bildauflösung von mehr als 4 Mio. Pixel auf einer Fläche von wenigen Quadratzentimetem. Die Zeit für das Auslesen der Bildinformation eines mit einem solchen Sensor aufgenommenen Bildes beträgt jedoch ca. 0,5 Sekunden. Sie ist damit um ein vielfaches größer als eine gewünschte Belichtungszeit. Es ist daher erforderlich, eine solche CCD-Sensoreinheit mit "Full-Frame-CCD-Sensor" beim Auslesen abzudunkeln um das Verschmieren oder Verwischen eines erfassten Bildes zu vermeiden.

Um eine hohe Lichttransmission bei gleichzeitig gutem Löschungsvermögen zu gewährleisten, werden zum Abdunkeln der CCD-Sensoreinheit für den Auslesevorgang in einer Kamera mechanische Verschlüsse eingesetzt.

Grundsätzlich können mechanische Verschlüsse zwar auf einer Zeitskala von wenigen Millisekunden präzise geschlossen werden. Das Öffnen eines mechanischen Verschlusses ist jedoch weniger genau steuerbar, weil aufgrund der dabei schnell bewegten Bauteile mechanische Schwingungen auftreten, deren Zeitskala mehrere zehn Millisekunden betragen kann. Es erweist sich somit als unmöglich, den Zeitpunkt der Öffnung für einen mechanischen Verschluss auf Millisekunden genau festzulegen. Darüber hinaus rufen die beim Öffnen eines solchen Verschlusses auftretenden Schwingungen Helligkeitsschwankungen eines aufgenommenen Bildes hervor.

Aufgabe der Erfindung ist es, eine hoch auflösende Kamera mit einer CCD-Sensoreinheit bereitzustellen, bei der es auch bei Verwendung eines mechanischen Verschlusses möglich ist, einen Aufnahmezeitpunkt für ein Bild mit einer Genauigkeit einzustellen, die deutlich unterhalb der Größenordnung von Millisekunden im Bereich von 100 Mikrosekunden liegt, sowie ein Verfahren zum Betrieb einer Kamera mit CCD-Sensoreinheit zu schaffen, mit dem der Zeitpunkt für eine Bildaufnahme auf der Zeitskala von Millisekunden festgelegt werden kann. Diese Aufgabe wird mit dem Gegenstand des Anspruchs 1 und Anspruchs 8 gelöst.

Eine Kamera gemäß Anspruch 1 hat eine CCD-Sensoreinheit, einen Verschluss im Abbildungsstrahlengang und eine Einrichtung für Reset der CCD-Sensoreinheit. Die Einrichtung für Reset der CCD-Sensoreinheit umfasst eine Steuereinheit, die mit der CCD-Sensoreinheit gekoppelt ist und einen Reset der CCD-Sensoreinheit nach Öffnung des Verschlusses bewirkt. Auf diese Weise wird eine Kamera bereitgestellt, bei der sich Schwingungsvorgänge, die beim Öffnen eines mechanischen Verschlusses auftreten, nicht auf eine Bildaufnahme auswirken.

Bei einem Verfahren zum Betrieb einer Kamera gemäß Anspruch 8 wird ein Verschluss geöffnet und es erfolgt nach Öffnung des Verschlusses ein Reset einer CCD-Sensoreinheit. Auf diese Weise lässt sich der Zeitpunkt für eine Bildaufnahme auf wenige Mikrosekunden. genau, nämlich der Zeitskala für das Ansprechverhalten eines CCD-Chips, einstellen.

In Weiterbildung der Erfindung umfasst die Steuereinheit eine Zeitüberwachungsschaltung. Indem der genaue Zeitpunkt für Reset der CCD-Sensoreinheit auf den Öffnungszeitpunkt des Verschlusses, d.h. den Zeitpunkt des Beginns von dessen Öffnung bezogen wird, kann sichergestellt werden, dass bei Verwendung mechanischer Verschlüsse im Laufe einer Bildaufnahme die Lichttransmission durch den Verschluss nicht schwankt. Wird der Zeitpunkt für Reset absolut definiert, so kann der genaue Zeitpunkt für eine Bildaufnahme exakt festgelegt werden. Dies ist besondere für Luftbildaufnahmen oder bei PIN-Pointaufnahmen von Interesse.

In Weiterbildung der Erfindung ist für den Verschluss ein piezoelektrischer oder elektromagnetischer Antrieb vorgesehen. Auf diese Weise wird ein robuster und zuverlässiger Antrieb für die Kamera bereitgestellt.

Eine Kameraanordnung mit Kameras, deren Bildaufnahmezeitpunkt aufeinander abgestimmt ist, wird geschaffen, indem gemäß Anspruch 6 wenigstens eine erste Kamera mit einer CCD-Sensoreinheit, einer Einrichtung für Reset der Sensoreinheit und einem Verschluss im Abbildungsstrahlengang mit einer zweiten solchen Kamera kombiniert wird, wobei eine Zeitüberwachungssteuerung vorgesehen ist, die einen Reset einer jeden CCD-Sensoreinheit zu einem definierten Zeitpunkt ermöglicht.

Indem bei einer solchen Kameraanordnung der Verschluss der ersten Kamera und der zweiten Kamera geöffnet wird und darauf ein Reset der CCD-Sensoreinheit in der ersten Kamera und in der zweiten Kamera erfolgt, kann für Luftbildaufnahmen eine große Bodenabdeckung durch synchrone Aufnahme verschiedener Objektbereiche erzielt werden. Bei synchroner Aufnahme verschiedener Farbkanäle ermöglicht eine solche Kameraanordnung dann auch eine hohe Farbauflösung. Dabei kann ein Reset der entsprechenden CCD-Sensoreinheiten zeitgleich, d.h. synchron oder zeitlich versetzt erfolgen. Der Reset einer CCD-Sensoreinheit zu einem bestimmten Zeitpunkt ermöglicht es, beispielsweise einen genauen Aufnahmezeitpunkt mit der Bewegung eines Flugkörpers zu referenzieren.

Vorteilhafte Ausführungsformen der Erfindung sind in den Zeichnungen dargestellt und werden nachfolgend beschrieben.

Es zeigen:
- Figur 1: eine Kamera mit einer CCD-Sensoreinheit;
- Figur 2: die Lichttransmission I des mechanischen Verschlusses als Funktion der Zeit sowie den günstigen Zeitpunkt eines Reset-Signals für eine CCD-Sensoreinheit; und
- Figur 3: eine Kameraanordnung für synchronisierte Bildaufnahme.

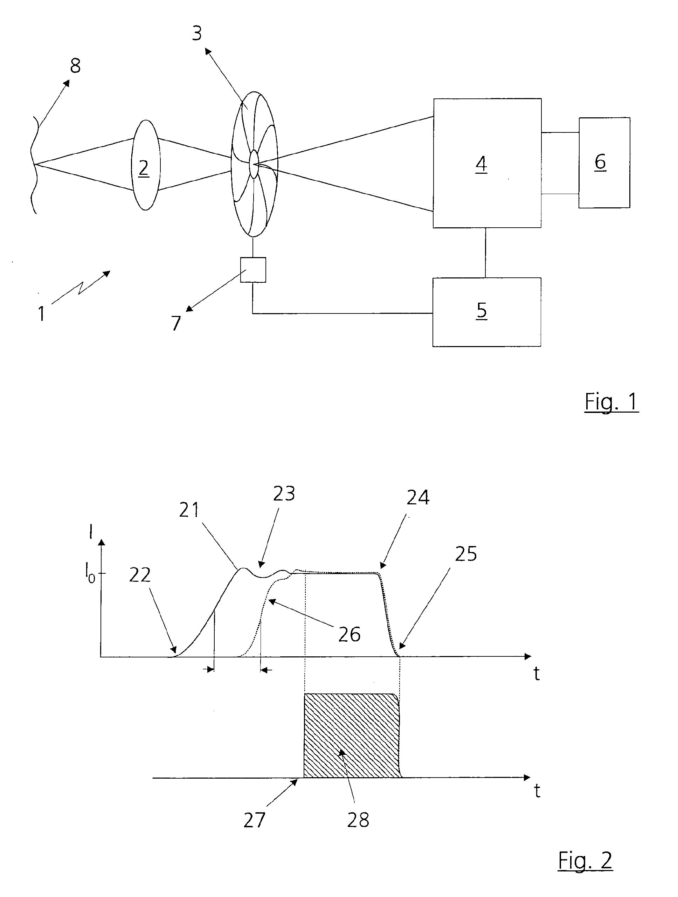

Die Figur 1 zeigt eine Kamera 1 mit einer Objektivlinse 2. Die Kamera umfasst weiter einen mechanischen Verschluss 3, der einen Strahlengang von einem Objektbereich 8 auf eine als Full-Frame CCD-Sensor ausgebildete CCD-Sensoreinheit 4 sperren und freigeben kann. Der CCD-Sensoreinheit 4 ist eine Steuereinheit 5 zugeordnet, mittels der ein Reset der CCD-Sensoreinheit 4 eingestellt werden kann und die das Auslesen der CCD-Sensoreinheit 4 in einen elektronischen Speicher 6 bewirkt.

Die Steuereinheit 5 ist mit einem piezoelektrischen Stellglied 7 verbunden, dass den mechanischen Verschluss 3 antreibt, so dass dieser über Signale von der Steuereinheit 5 geöffnet und geschlossen werden kann.

Die Funktionsweise der Kamera 1 aus Figur 1 ist anhand der Figur 2 erläutert, in der mit der durchgezogenen Linie 21 die der Öffnungsfläche des Verschlusses 3 aus Figur 1 proportionale Lichttransmission I als Funktion der Zeit aufgetragen ist. Wird von der Steuereinheit 5 an das piezoelektrische Stellglied 7 ein Signal zur Öffnung des Verschlusses 3 zu einem Zeitpunkt 22 abgegeben, so steigt die Lichttransmission I auf einer Zeitskala von etwa 10 Millisekunden an und weist in einem Bereich 23 ein charakteristisches Einschwingverhalten auf. Die Ursache für dieses Schwingungsverhalten liegt in der Elastizität der für den mechanischen Verschluss verwendeten Bauteile, deren Trägheit, sowie in Reibung und Lagerspielen. Nach Abklingen dieses Schwingungsverhaltens stellt sich ein gewünschter Wert I₀ für die Lichttransmission des Verschlusses ein. Dieser Wert lässt sich auch bei einem mechanischen Verschluss mit großer Genauigkeit einstellen und variiert im Hinblick auf Fertigungstoleranzen praktisch nicht. Wird mit der Steuereinheit 5 an das Stellglied 7 zum Zeitpunkt 24 ein Signal zum Schließen des Verschlusses 3 aus Figur 1 abgegeben, so nimmt die Lichttransmission des Verschlusses von einem eingestellten Wert auf den Wert Null zum Zeitpunkt 25 ab. Die Größenordnung der Dauer des Schließvorganges des Verschlusses liegt im Bereich von Millisekunden.

Verschleiß und Fertigungstoleranzen für einen mechanischen Verschluss führen dazu, dass dessen Öffnung sich nur auf einer Zeitskala von zehn Millisekunden genau einstellen lässt. Die Kurve 26 in Figur 2 zeigt das Öffnungsverhalten eines dem Verschluss 3 aus Figur 1 entsprechenden Verschlusses, der in gleicher Weise angesteuert wird. Die Zeit, welche für das Erreichen der gewünschten Lichttransmission I₀, sowie das beim Öffnungsvorgang auftretende Schwingungsverhalten ist verschieden. Es zeigt sich jedoch, dass trotz dieses unterschiedlichen Öffnungsverhaltens von mechanischen Verschlüssen der Schließvorgang auf einer Zeitskala von ca. einer Millisekunde identisch ist.

Die Steuereinheit 5 aus Figur 1 wirkt als Verzögerungsschaltung. Nachdem das Einschwingverhalten des Verschlusses 3 aufgrund dessen Öffnung abgeklungen ist, gibt die Steuereinheit 5 zum Zeitpunkt 27 ein Reset-Signal auf die CCD-Sensoreinheit, welches bewirkt, dass alle lichtempfindlichen Pixel dieses Sensors in den gleichen Zustand versetzt werden. Die Zeitskala für das Herstellen dieses Reset-Zustands liegt im Bereich von Mikrosekunden. Die Durchführung eines Resets bei abgeklungenem Einschwingen eines geöffneten Verschlusses bemöglicht also den Zeitpunkt für den Beginn einer Bildaufnahme mit einem CCD-Sensor um mehr als vier Größenordnungen präziser einzustellen als dies durch Betätigen eines mechanischen Verschlusses möglich ist.

Der Belichtungsvorgang für die CCD-Sensoreinheit 4 aus Figur 1 wird durch schließen des mechanischen Verschlusses 3 abgebrochen. Der Schließvorgang wird über ein Steuersignal der Steuereinheit 5 ausgelöst. Trotz Fertigungstoleranzen, Reibung und der Elastizität von Bauteilen kann der mechanische Verschluss 3 auf einer Zeitskala von einer Millisekunde geschlossen werden, d.h. auf dieser Zeitskala ist es möglich, die Lichttransmission I des geöffneten Verschlusses auf einen Wert zu verringern, der unterhalb von 10% des Öffnungswertes liegt. Ein mit der schraffierten Fläche 28 in Figur 2 angedeuteter Lichtfluss kann somit während einer Bildaufnahme mit der Kamera 1 mit guter Genauigkeit konstant gehalten werden.

Für eine modifizierte Ausführungsform der Kamera aus Figur 1 ist in der Steuereinheit 5 eine Zeitüberwachungsschaltung vorgesehen. Diese Zeitüberwachungsschaltung ermöglicht es einerseits, dass Zeitintervall zwischen einem von der Steuereinheit auf eine Stelleinheit ausgegebenen Signals zur Öffnung des Verschlusses im Bereich von 10⁻⁶ Sekunden zu überwachen und zum andern in Absolutzeitpunkt für ein von der Steuereinheit auf die CCD-Sensoreinheit abgegebenes Reset-Signal auf dieser Zeitskala definiert festzulegen. Dies ermöglicht insbesondere eine exakte Synchronisation mehrerer Kameras, was insbesondere für Luftbildaufnahmen, insbesondere von PIN-Point Aufnahmen erforderlich ist.

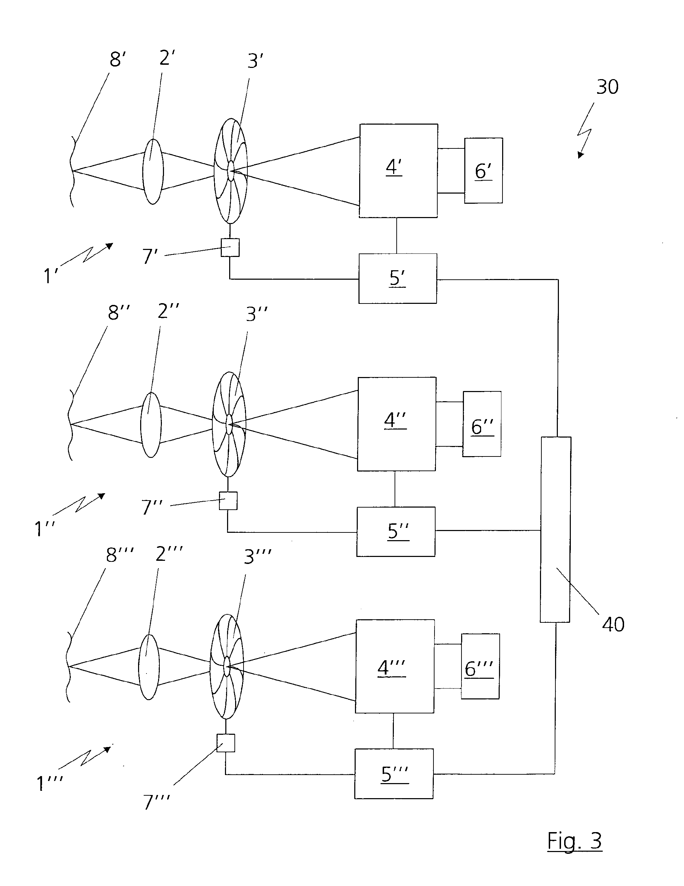

Die Figur 3 zeigt eine für Luftbildaufnahmen geeignete Kameraanordnung 30, die aus einer Mehrzahl von Kameras 1', 1" und 1"' besteht, deren Aufbau jeweils der Kamera aus Figur 1 entspricht und bei denen der Kamera 1 aus Figur 1 entsprechende Baugruppen mit entsprechend gestrichelten Bezugszeichen kenntlich gemacht sind.

Die Kameras 1', 1" und 1"' sind für eine zeitüberwachte Auslösung mit einander kombiniert. Eine Überwachungseinheit 40 gibt für eine synchronisierte Bildaufnahme mit den Kameras einen Steuerbefehl an die Steuereinheiten 5', 5" und 5''' aus, wodurch eine Öffnung der Verschlüsse 3', 3" und 3"' bewirkt wird und nach einem definierten Zeitintervall ein synchroner Reset der CCD-Sensoreinheit 4', 4" und 4"' erfolgt. Um eine Belichtung der CCD-Sensoreinheiten 4', 4" und 4"' zu einem gewünschten Zeitpunkt abzuschließen wird dann von der Überwachungseinheit 40 auf die Steuereinheiten 5', 5" und 5'" ein Steuerbefehl für das Schließen der Verschlüsse ausgegeben, worauf diese die Stelleinheiten 7', 7" und 7"' entsprechend ansteuern.

Anstatt bei den 3 Kameras eine Bildaufnahme zeitlich exakt zu synchronisieren, ist es auch möglich, für die Bildaufnahme zueinander verschobene zeitlich exakt festgelegte Zeitfenster vorzusehen.

Selbstverständlich ist die Anzahl der Kameras in einer solchen Kamera grundsätzlich nicht beschränkt. So sind insbesondere für Luftbildaufnahmen 8 parallel arbeitende Kameras günstig.

Statt bei den beschriebenen Kameras einen piezoelektrischen Antrieb für das Öffnen und Schließen des Verschlusses vorzusehen, ist es selbstverständlich auch möglich, diesen Antrieb elektromagnetisch oder in einer anderen geeigneten Form auszuführen.

## Patentansprüche

1. Kamera
mit einer CCD-Sensoreinheit,
mit einem Verschluss im Abbildungsstrahlengang, und
mit einer Einrichtung für Reset der CCD-Sensoreinheit,
**dadurch gekennzeichnet, dass**
die Einrichtung für Reset der CCD-Sensoreinheit (4) eine Steuereinheit (5) umfasst, die mit der CCD-Sensoreinheit (4) gekoppelt ist und einen Reset der CCD-Sensoreinheit (4) nach Öffnung des Verschlusses (3) bewirkt.

2. Kamera nach Anspruch 1, **dadurch gekennzeichnet, dass** die Steuereinheit (5) eine Zeitüberwachungsschaltung umfasst, die bewirkt, dass ein Reset der CCD-Sensoreinheit (4) zu einem definierten Zeitpunkt (27) erfolgt.

3. Kamera nach Anspruch 2, **dadurch gekennzeichnet, dass** der definierte Zeitpunkt (27) auf einen Öffnungszeitpunkt (22) für den Verschluss (3) bezogen ist.

4. Kamera nach Anspruch 2, **dadurch gekennzeichnet, dass** der definierte Zeitpunkt (27) absolut festgelegt ist.

5. Kamera nach einem der Ansprüche 1 bis 4, **dadurch gekennzeichnet, dass** für den Verschluss (3) ein piezoelektrischer oder elektromagnetischer Antrieb vorgesehen ist.

6. Kameraanordnung mit wenigstens einer ersten und einer zweiten Kamera, wobei eine jede Kamera eine CCD-Sensoreinheit, eine Einrichtung für Reset der Sensoreinheit und einen Verschluss im Abbildungsstrahlengang aufweist,
**dadurch gekennzeichnet, dass**
eine Überwachungseinheit (40) vorgesehen ist, die einen Reset einer jeden CCD-Sensoreinheit (4', 4", 4'") zu definierten Zeitpunkten ermöglicht.

7. Kameraanordnung nach Anspruch 6, **dadurch gekennzeichnet, dass** wenigstens eine Kamera nach einem der Ansprüche 1 bis 5 ausgebildet ist.

8. Verfahren zum Betrieb einer Kamera, insbesondere einer Kamera nach einem der Ansprüche 1 bis 5, bei dem ein Verschluss (3) geöffnet wird und nach Öffnung des Verschlusses (3) ein Reset einer CCD-Sensoreinheit (4) erfolgt.

9. Verfahren zum Betrieb einer Kameraanordnung mit wenigstens einer ersten und einer zweiten Kamera, insbesondere einer Kameraanordnung nach Anspruch 6 oder Anspruch 7, bei dem ein Verschluss (3', 3") der ersten Kamera (1') und der zweiten Kamera (1") geöffnet wird und darauf für eine jede CCD-Sensoreinheit (4', 4") in der ersten Kamera (1') und der zweiten Kamera (1") ein Reset erfolgt.

10. Verfahren nach Anspruch 9, **dadurch gekennzeichnet, dass** der Reset der CCD-Sensoreinheit (4) der ersten Kamera (1') und der CCD-Sensoreinheit (4") der zweiten Kamera (1") zeitgleich erfolgt.

11. Verfahren nach Anspruch 9, **dadurch gekennzeichnet, dass** der Reset der CCD-Sensoreinheit (4') der ersten Kamera (1') und der CCD-Sensoreinheit (4") der zweiten Kamera (1") zeitlich versetzt erfolgt.

12. Verfahren nach einem der Ansprüche 9 bis 11, **dadurch gekennzeichnet, dass** ein Reset einer CCD-Sensoreinheit (4', 4") einer Kamera (1', 1") zu einem definierten Zeitpunkt erfolgt.
